# EUROPEAN PATENT SPECIFICATION

(11) **EP 3 958 513 B1**
(45) Date of publication and mention of the grant of the patent: **09.10.2024**
(21) Application number: 20791922.6
(22) Date of filing: 03.03.2020
(51) Int. Cl.: H04L 12/28, G06F 21/55, H04L 12/12, H04L 43/045, H04L 43/0876

(54) **COMMUNICATION MONITORING SYSTEM AND COMMUNICATION MONITORING METHOD**
KOMMUNIKATIONSÜBERWACHUNGSSYSTEM UND KOMMUNIKATIONSÜBERWACHUNGSVERFAHREN
SYSTÈME DE SURVEILLANCE DE COMMUNICATION ET PROCÉDÉ DE SURVEILLANCE DE COMMUNICATION

(30) Priority: 19.04.2019 JP 2019080139
(43) Date of publication of application: 23.02.2022
(73) Proprietor: OMRON Corporation, Shiokoji-dori, Shimogyo-Ku Kyoto-shi Kyoto 600-8530 (JP)
(72) Inventor: IGARASHI, Hisanori, Kyoto-shi, Kyoto 600-8530 (JP)
(74) Representative: Mewburn Ellis LLP
(86) International application number: PCT/JP2020/008908
(87) International publication number: WO 2020/213271

(56) References cited:
- JP-A- 2017 194 744
- JP-A- 2019 004 564
- MOUSTAFA NOUR ET AL: "A New Threat Intelligence Scheme for Safeguarding Industry 4.0 Systems", IEEE ACCESS, vol. 6, 7 June 2018 (2018-06-07), pages 32910 - 32924, XP011686526, DOI: 10.1109/ACCESS.2018.2844794
- CACHADA ANA ET AL: "Maintenance 4.0: Intelligent and Predictive Maintenance System Architecture", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 139 - 146, XP033426019, DOI: 10.1109/ETFA.2018.8502489
- DIEZ-OLIVAN ALBERTO ET AL: "Data fusion and machine learning for industrial prognosis: Trends and perspectives towards Industry 4.0", INFORMATION FUSION, ELSEVIER, US, vol. 50, 15 October 2018 (2018-10-15), pages 92 - 111, XP085650635, ISSN: 1566-2535, DOI: 10.1016/J.INFFUS.2018.10.005

## Description

### TECHNICAL FIELD

The present invention relates to monitoring of communication over a network.

### BACKGROUND ART

For control of various facilities and control of various devices installed in various facilities, a controller system such as PLC (Programmable Logic Controller) is used. A control device is capable of monitoring abnormalities that occur to facilities and/or machines to be controlled, and also capable of monitoring abnormalities of the control device itself. When a certain abnormality is detected, the control device gives a notification outward in a certain way.

For example, Japanese Patent Laying-Open No. 2000-137506 (PTL 1) discloses a programmable controller that transmits an electronic mail to an address designated in advance, when an abnormality history is registered or when a predetermined time is reached.

### CITATION LIST

### PATENT LITERATURE

PTL 1: Japanese Patent Laying-Open No. 2000-137506
PTL 2: Moustafa Nour et al: "A New Threat Intelligence Scheme for Safeguarding Industry 4.0 Systems", IEEE ACCESS, vol. 6, pages 32910-32924, XP011686526, DOI: 10.1109/ACCESS.2018.2844794. PTL 2 discloses a threat intelligence scheme for safeguarding industry 4.0 systems.

### SUMMARY OF INVENTION

### TECHNICAL PROBLEM

With the recent advances of ICT (Information and Communication Technology), a control device is connected to a wider variety of external devices over a network and more sophisticated processing is performed by the control device. While networks for FA (Factory Automation) sites have various names such as industrial network, FA network, and field network, the term "network" or "FA network" is used in the following.

As a control system is networked or made intelligent, kinds of expected threats are increasing. Meanwhile, on FA sites, a variety of communications are done depending on production devices.

Generally, communication on the network is monitored to detect occurrence of a security incident. On the FA network over which a wide variety of communications are performed, however, occurrence of a security incident cannot easily be specified by communication monitoring only.

An object of the present invention is therefore to facilitate monitoring of the condition of communication over the FA network.

### SOLUTION TO PROBLEM

In a first aspect, the present invention provides a communication monitoring system according to claim 1.

In accordance with the foregoing, monitoring of the condition of communication over the FA network can be facilitated. Statistics of communication data are irrelevant to production data. Because of this, it is difficult to detect occurrence of a security incident by merely monitoring the communication data. However, the communication data can be associated with the production data in such a manner that the communication data is synchronized with the production data, to thereby enable a change of the condition of communication and a change of the condition of production to be confirmed simultaneously. For example, when one factor of a certain abnormality occurring to a production line is an attack through the FA network, the production data and the communication data could be changed simultaneously. In such a case, it is possible to detect occurrence of the incident to the network.

Preferably, the production data is a production score representing abnormality occurring to a production line.

In accordance with the foregoing, it is possible to identify an incident of the network, from a change of the production score. A rise of the production score represents the fact that a certain abnormality is occurring to a production line. When the rise of the production score occurs at the same time as a large change of the communication data, a possibility of occurrence of an incident to the network can be detected.

Preferably, the production score is a score calculated for each of frames that represents a unit time of the production by the production device.

In accordance with the foregoing, a change of the communication data can be monitored for each unit time of production. Accordingly, the relation between the condition of communication and the condition of production can further be clarified.

Preferably, the communication data includes a volume of communication over the network and a communication log, and the data analysis unit is configured to hold communication logs generated in a predetermined number of the respective frames including a frame in which the production score has an abnormal value, and discard communication logs generated in frames other than the predetermined number of the respective frames.

In accordance with the foregoing, increase of the volume of log data can be restrained.

In a second aspect, the present invention provides a communication monitoring method according to claim 5.

In accordance with the foregoing, monitoring of the condition of communication over the FA network can be facilitated.

### ADVANTAGEOUS EFFECTS OF INVENTION

In accordance with the present invention, monitoring of the condition of communication over the FA network can be facilitated.

### BRIEF DESCRIPTION OF DRAWINGS

Fig. 1 is an external view showing an example configuration of a control device according to the present embodiment.
Fig. 2 is a schematic diagram showing an example hardware configuration of a control unit that is a part of the control device according to the present embodiment.
Fig. 3 is a schematic diagram showing an example hardware configuration of a communication unit that is a part of the control device according to the present embodiment.
Fig. 4 is a schematic diagram showing an example hardware configuration of a safety unit that is a part of the control device according to the present embodiment.
Fig. 5 is a schematic diagram showing a typical example of a control system including the control device according to the present embodiment.
Fig. 6 is a schematic diagram showing an example hardware configuration of a support device connected to the control device according to the present embodiment.
Fig. 7 shows a schematic configuration of a monitoring system according to the present embodiment.
Fig. 8 is a schematic diagram showing an example time series of the volume of communication.
Fig. 9 is a schematic diagram showing an example of time-series production data.
Fig. 10 schematically shows an example display of time-series communication data and time-series production data.
Fig. 11 shows a communication data graph and a production data graph extracted from a display screen shown in Fig. 10.

### DESCRIPTION OF EMBODIMENTS

Embodiments of the present invention are described in detail with reference to the drawings. In the drawings, the same or corresponding parts are denoted by the same reference characters, and a description thereof is not herein repeated.

### <A. Control Device>

Initially, a description is given of a control device 1 that communicates with a target to be monitored, in a monitoring system according to the present embodiment.

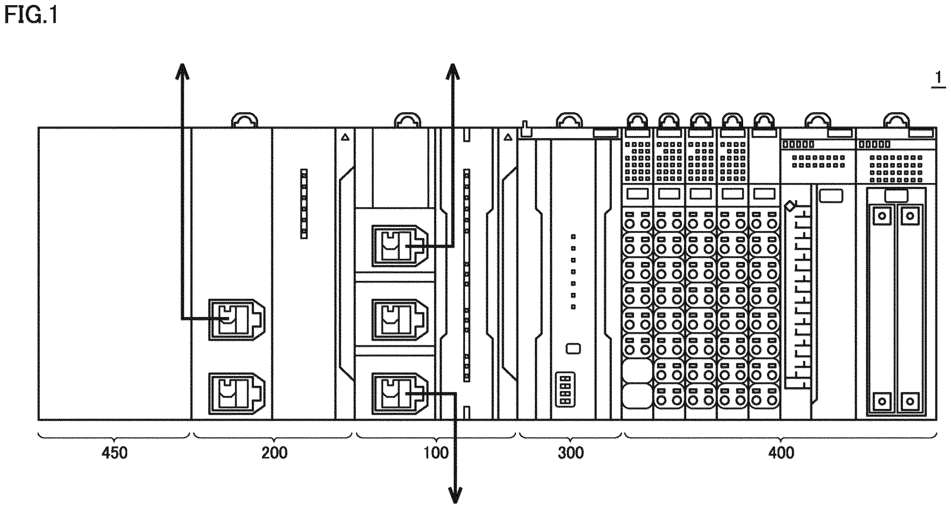

Fig. 1 is an external view showing an example configuration of control device 1 according to the present embodiment. Referring to Fig. 1, control device 1 includes a control unit 100, a communication unit 200, a safety unit 300, one or more functional units 400, and a power supply unit 450.

Control unit 100 is connected with communication unit 200 through any data transmission line (such as PCI Express^{®} or Ethernet^{®}, for example). Control unit 100 is connected with safety unit 300 and one or more functional units 400 through an internal bus (not shown).

Control unit 100 performs central processing in control device 1. In accordance with required specifications that are designed arbitrarily, control unit 100 performs a control operation for controlling a target to be controlled. Relative to a control operation to be performed by safety unit 300 described later herein, the control operation performed by control unit 100 is also referred to herein as "standard control." In the example configuration shown in Fig. 1, control unit 100 includes one or more communication ports.

Communication unit 200 is connected to control unit 100 and responsible for a security function for control device 1. In the example configuration shown in Fig. 1, communication unit 200 includes one or more communication ports. Details of the security function provided by communication unit 200 are described later herein.

Safety unit 300 performs, independently of control unit 100, a control operation for implementing a safety function for a target to be controlled. The control operation performed by safety unit 300 is also referred to herein as "safety control." Usually, "safety control" is designed to satisfy requirements for implementing the safety function defined in IEC 61508 or the like. "Safety control" is a general term for processes for preventing threats to human safety from facilities, machines or the like.

Functional unit 400 provides various functions for implementing control for a target to be controlled by control device 1. Typically, functional unit 400 may include an I/O unit, a safety I/O unit, a communication unit, a motion controller unit, a temperature adjustment unit, and a pulse counter unit, for example. Examples of the I/O unit include a digital input (DI) unit, a digital output (DO) unit, an analog output (Al) unit, an analog output (AO) unit, a pulse catch input unit, and a composite unit made up of a plurality of different kinds of I/O units, for example. The safety I/O unit is responsible for an I/O process for safety control.

Power supply unit 450 provides electric power of a predetermined voltage to each of the units constituting control device 1.

### <B. Example Hardware Configuration of Each Unit>

Next, a description is given of an example hardware configuration of each of the units constituting control device 1 according to the present embodiment.

### b1: Control Unit 100

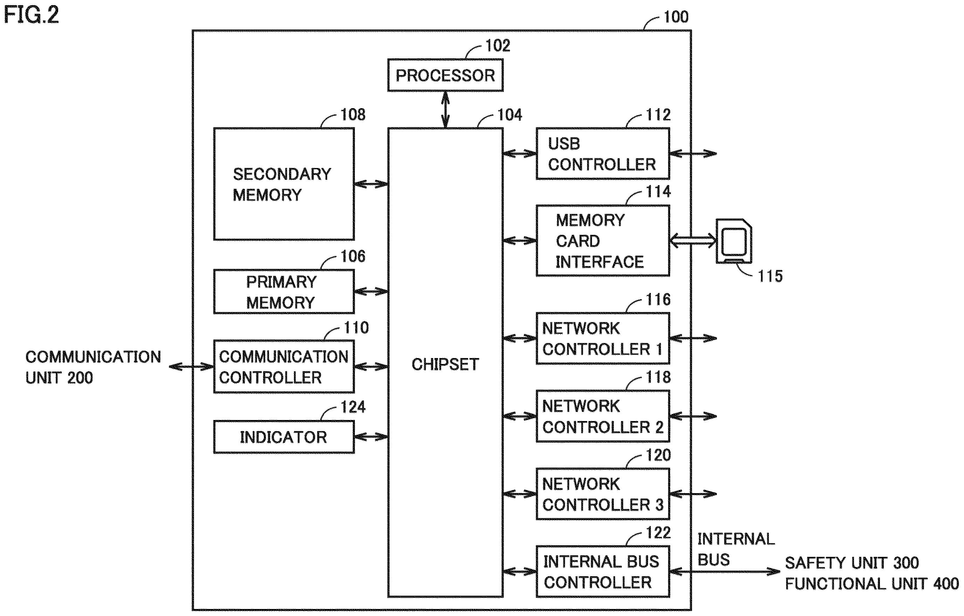

Fig. 2 is a schematic diagram showing an example hardware configuration of control unit 100 that is a part of control device 1 according to the present embodiment. Referring to Fig. 2, control unit 100 includes, as principal components, a processor 102 such as CPU (Central Processing Unit) and GPU (Graphical Processing Unit), a chipset 104, a primary memory 106, a secondary memory 108, a communication controller 110, a USB (Universal Serial Bus) controller 112, a memory card interface 114, network controllers 116, 118, 120, an internal bus controller 122, and an indicator 124.

Processor 102 reads various programs stored in secondary memory 108 and deploys and executes the programs in primary memory 106 to implement a control operation for the standard control as well as various processes as described later herein. Chipset 104 acts as an intermediate agent for data exchange between processor 102 and each component to implement a process to be performed by control unit 100 as a whole.

In addition to a system program, a control program running in an execution environment provided by the system program is stored in secondary memory 108.

Communication controller 110 is responsible for data exchange with communication unit 200. As communication controller 110, a communication chip adapted to the PCI Express or Ethernet, for example, may be employed.

USB controller 112 is responsible for data exchange with any information processor via USB connection.

Memory card interface 114 is configured to allow a memory card 115 to be attached to and detached from memory card interface 114, and enable data of a control program and/or various settings to be written to memory card 115, or enable data of a control program and/or various settings to be read from memory card 115.

Each of network controllers 116, 118, 120 is responsible for data exchange with any device through a network. For network controllers 116, 118, 120, an industrial network protocol such as EtherCAT^{®}, EtherNet/IP^{®}, DeviceNet^{®}, CompoNet^{®} may be employed.

Internal bus controller 122 is responsible for data exchange with safety unit 300 and one or more functional units 400 that are a part of control device 1. For the internal bus, a communication protocol unique to a manufacturer may be used, or a communication protocol identical to or pursuant to any industrial network protocol may be used.

Indicator 124 gives a notification of an operational state for example of control unit 100, and is made up of one or more LEDs arranged on the unit surface.

While Fig. 2 shows an example configuration where processor 102 executes a program to provide necessary functions, a part or all of these provided functions may be implemented by means of a dedicated hardware circuit (such as ASIC (Application Specific Integrated Circuit) or FPGA (Field-Programmable Gate Array), for example). Alternatively, a principal part of control unit 100 may be implemented by means of hardware (industrial personal computer based on a general-purpose personal computer, for example) conforming to a general-purpose architecture. In this case, virtualization technology may be used to cause a plurality of OSs (Operating Systems) for different uses to be executed in parallel and cause a necessary application to be executed on each OS.

### b2: Communication Unit 200

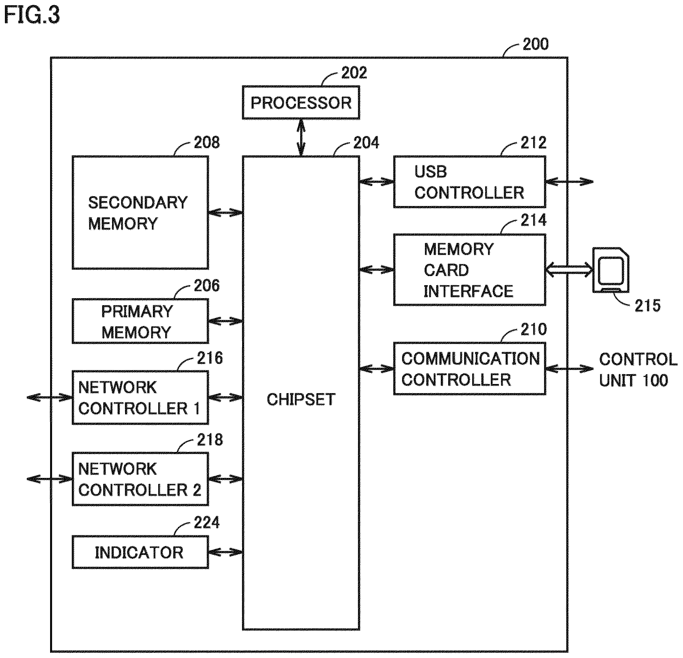

Fig. 3 is a schematic diagram showing an example hardware configuration of communication unit 200 that is a part of control device 1 according to the present embodiment. Referring to Fig. 3, communication unit 200 includes, as principal components, a processor 202 such as CPU and GPU, a chipset 204, a primary memory 206, a secondary memory 208, a communication controller 210, a USB controller 212, a memory card interface 214, network controllers 216, 218, and an indicator 224.

Processor 202 reads various programs stored in secondary memory 208 and deploys and executes the programs in primary memory 206 to implement various security functions as described later herein. Chipset 204 acts as an intermediate agent for data exchange between processor 202 and each component to implement a process to be performed by communication unit 200 as a whole.

In addition to a system program, a security system program running in an execution environment provided by the system program is stored in secondary memory 208.

Communication controller 210 is responsible for data exchange with control unit 100. As communication controller 210, a communication chip adapted to the PCI Express or Ethernet, for example, may be employed, like communication controller 210 of control unit 100.

USB controller 212 is responsible for data exchange with any information processor through USB connection.

Memory card interface 214 is configured to allow a memory card 215 to be attached to and detached from memory card interface 214, and enable data of a control program and/or various settings to be written to memory card 215, or enable data of a control program and/or various settings to be read from memory card 215.

Each of network controllers 216, 218 is responsible for data exchange with any device through a network. For network controllers 216, 218, a general-purpose network protocol such as Ethernet^{®} may be employed.

Indicator 224 gives a notification of an operational state for example of communication unit 200, and is made up of one or more LEDs arranged on the unit surface.

While Fig. 3 shows an example configuration where processor 202 executes a program to provide necessary functions, a part or all of these provided functions may be implemented by means of a dedicated hardware circuit (such as ASIC or FPGA, for example). Alternatively, a principal part of communication unit 200 may be implemented by means of hardware (an industrial personal computer based on a general-purpose personal computer, for example) conforming to a general-purpose architecture. In this case, virtualization technology may be used to cause a plurality of OSs for different uses to be executed in parallel and cause a necessary application to be executed on each OS.

### b3: Safety Unit 300

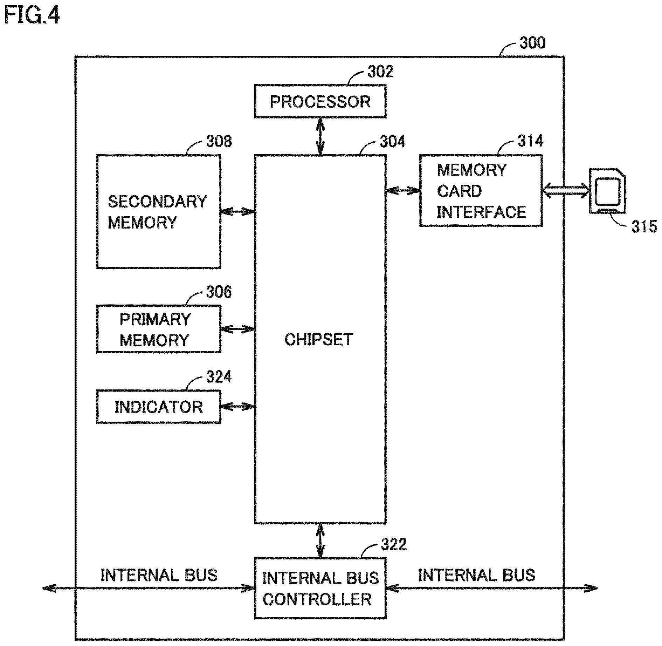

Fig. 4 is a schematic diagram showing an example hardware configuration of safety unit 300 that is a part of control device 1 according to the present embodiment. Referring to Fig. 4, safety unit 300 includes, as principal components, a processor 302 such as CPU and GPU, a chipset 304, a primary memory 306, a secondary memory 308, a memory card interface 314, an internal bus controller 322, and an indicator 324.

Processor 302 reads various programs stored in secondary memory 308 and deploys and executes the programs in primary memory 306 to implement a control operation for the safety control as well as various processes as described later herein. Chipset 304 acts as an intermediate agent for data exchange between processor 302 and each component to implement a process to be performed by safety unit 300 as a whole.

In addition to a system program, a safety program running in an execution environment provided by the system program is stored in secondary memory 308.

Memory card interface 314 is configured to allow a memory card 315 to be attached to and detached from memory card interface 314, and enable data of a safety program and/or various settings to be written to memory card 315, or enable data of a safety program and/or various settings to be read from memory card 315.

Internal bus controller 322 is responsible for data exchange with control unit 100 through the internal bus.

Indicator 324 gives a notification of an operational state for example of safety unit 300, and is made up of one or more LEDs arranged on the unit surface.

While Fig. 4 shows an example configuration where processor 302 executes a program to provide necessary functions, a part or all of these provided functions may be implemented by means of a dedicated hardware circuit (such as ASIC or FPGA, for example). Alternatively, a principal part of safety unit 300 may be implemented by means of hardware (an industrial personal computer based on a general-purpose personal computer, for example) conforming to a general-purpose architecture. In this case, virtualization technology may be used to cause a plurality of OSs for different uses to be executed in parallel and cause a necessary application to be executed on each OS.

### <C. Control System 10>

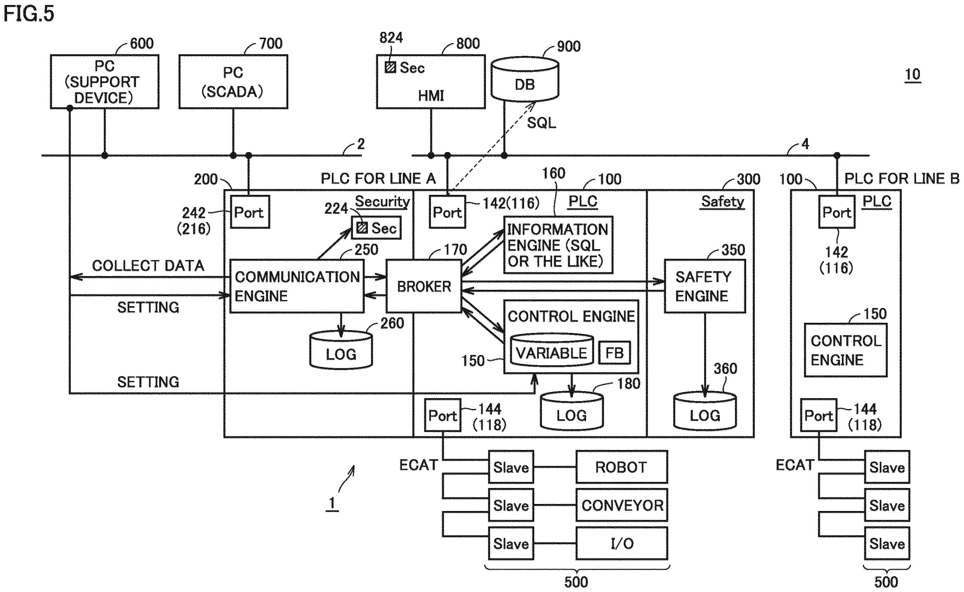

Next, a typical example of a control system 10 including control device 1 according to the present embodiment is described. In the following, database is denoted by "DB." Fig. 5 is a schematic diagram showing a typical example of control system 10 including control device 1 according to the present embodiment.

By way of example, control system 10 shown in Fig. 5 is configured to control two lines (Line A and Line B). Typically, each line is equipped with a conveyor for transporting workpieces, as well as a robot capable of giving any physical action on a workpiece on the conveyor.

For each of Line A and Line B, control unit 100 is placed. In addition to control unit 100 responsible for Line A, communication unit 200 and safety unit 300 constitute control device 1. For convenience of description, Fig. 5 does not show functional unit 400 and power supply unit 450.

Communication unit 200 of control device 1 is connected to a first network 2 through a communication port 242 (network controller 216 in Fig. 3). It is supposed that a support device 600 and a SCADA (Supervisory Control And Data Acquisition) device 700 are connected to first network 2.

Support device 600 can access at least control unit 100, and provides, to users, functions such as creation of a program to be executed by each unit included in control device 1, debugging, and setting of various parameters. Support device 600 also collects information from communication unit 200 and monitors the communication load on the FA network based on the collected information. Thus, support device 600 has a function specific to a monitoring device.

SCADA device 700 presents, to an operator, various types of information obtained from a control operation by control device 1, and generates an internal command for example to control device 1, in accordance with manipulation of the operator. SCADA device 700 also has the function of collecting data used by control device 1.

Control unit 100 of control device 1 is connected to a second network 4 through a communication port 142 (network controller 116 in Fig. 2). It is supposed that an HMI (Human Machine Interface) 800 and a database 900 are connected to second network 4.

HMI 800 presents, to an operator, various types of information obtained from a control operation by control device 1, and generates an internal command or the like to control device 1, in accordance with manipulation of the operator. Database 900 collects various types of data (information about the traceability measured from each workpiece, for example) transmitted from control device 1.

Control unit 100 of control device 1 is connected to one or more field devices 500 through a communication port 144 (network controller 118 in Fig. 2) and the FA network. Field device 500 includes a sensor and/or a detector that collects, from a target to be controlled, various types of information necessary for a control operation, and an actuator providing a certain action on the target to be controlled. In the example shown in Fig. 5, field device 500 includes a robot providing an external action on a workpiece, a conveyer to transport workpieces, and an I/O unit to exchange signals with a sensor and/or an actuator disposed in the field.

Similarly, control unit 100 responsible for Line B is also connected to one or more field devices 500 through communication port 144 (network controller 118 in Fig. 2) and the FA network.

Regarding a functional aspect of control device 1, control unit 100 includes a control engine 150 that is a process execution unit executing a control operation for the standard control, and an information engine 160 exchanging data with an external device. Communication unit 200 includes a communication engine 250 for implementing a communication monitoring function as described later herein. Safety unit 300 includes a safety engine 350 that is a process execution unit executing a control operation for safety control.

Each engine is implemented by any hardware element such as processor for each unit or any software element such as various programs, or a combination of these elements. Each engine can be implemented in any form.

Further, control device 1 includes a broker 170 acting as an intermediate agent for exchange between engines. The physical body of broker 170 may be disposed in one or both of control unit 100 and communication unit 200.

Control engine 150 holds a variable table that is necessary for execution of a control operation for controlling a target, and holds a function block (FB), for example. Each variable stored in the variable table is collected periodically to have a value obtained from field device 500 through an I/O refresh process, and each value is reflected periodically on field device 500. A log of the control operation by control engine 150 may be stored in a log database 180.

Information engine 160 performs any information processing on data held by control unit 100 (values of variables held in the variable table). Typically, information engine 160 performs a process of periodically transmitting, to database 900 for example, data held by control unit 100. For such data transmission, SQL or the like is used.

Communication engine 250 monitors target communication data and stores communication log data in the log database.

Communication engine 250 gives a notification, through indicator 224, of the fact that a certain event regarding security has occurred, or a level of an event regarding security that is occurring, for example.

Safety engine 350 corresponds to detection means that detects whether or not certain unauthorized access has occurred to control device 1. Safety engine 350 obtains and reflects, through control unit 100, safety I/O variables that are necessary for execution of a control operation for safety control. A log of safety control by safety engine 350 may be stored in a log database 360.

When communication engine 250 detects a certain event, for example, broker 170 causes change of operation for example of control engine 150, information engine 160, and safety engine 350.

### <D. Countermeasures against Security Threats>

Control device 1 according to the present embodiment is capable of detecting any security threat that hinders normal operation of facilities and/or machines, and carrying out necessary countermeasures.

"Security threat" herein refers to any event that hinders normal operation of facilities and/or machines. "Normal operation" herein refers to a condition where facilities and/or machines can continue running as per a system design and a production plan. It should be noted that auxiliary processes such as activation of facilities and/or machines, maintenance thereof, and changeover for allowing facilities and/or machines to keep running as per a system design and a production plan are also included in the concept of "normal operation."

All physical ports mounted on the control device are under security risk of being attacked. For example, control device 1 having a PLC as a principal component may be a target of DoS attack (Denial of Service attack) or DDoS attack (Distributed Denial of Service attack). Even during normal operation, access congestion on control device 1 may occur. Therefore, based on network settings, DoS attack or DDoS attack can be detected. When a specific port is externally attacked, control unit 100 blocks the port from receiving information. Meanwhile, communication through other ports is not blocked. Accordingly, control system 10 itself can keep running while control by control device 1 is restricted.

### <E. Problem with Monitoring of FA Network>

When a security incident occurs to the control system, influences of the incident are reflected on production data. For example, when lines cannot be synchronized with each other due to DoS attack or DDoS attack, for example, production may be halted. Besides, a part of required production data may not be acquired or acquisition of the data may be delayed due to attacks. In such a case, the production quality may be deteriorated.

Usually, production data is collected separately from communication data. Further, over the FA network, a wide variety of communications are conducted appropriately for field device 500 (production device). Therefore, an incident is difficult to identify by monitoring of communication data only. Analysis of logs for detecting an incident requires a large amount of logs to be stored. As a result, the volume of logs is increased. The high volume logs may be a factor that consumes the server capacity.

### <F. Hardware Configuration of Setting Device>

A description is given of an example of a user interface for monitoring the FA network in control system 10 described above. In the present embodiment, support device 600 shown in Fig. 5 functions as a setting device for a monitoring system that monitors communication regarding the FA network.

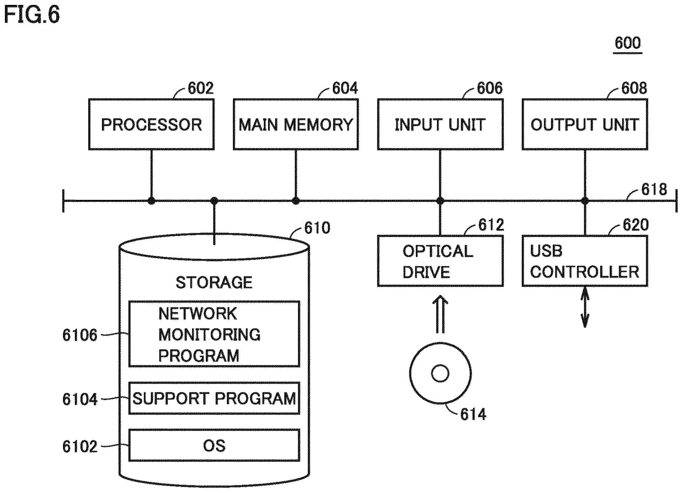

Fig. 6 is a schematic diagram showing an example hardware configuration of support device 600 connected to control device 1 according to the present embodiment. Support device 600 is implemented by means of hardware (general-purpose personal computer, for example) conforming to a general-purpose architecture, by way of example.

Referring to Fig. 6, support device 600 includes a processor 602, a main memory 604, an input unit 606, an output unit 608, a storage 610, an optical drive 612, and a USB controller 620. These components are connected to each other through a processor bus 618.

Processor 602 is configured as a CPU and/or a GPU for example, reads programs (e.g., OS 6102 and support program 6104) stored in storage 610, and deploys and executes the programs in main memory 604 to implement settings for control device 1.

Main memory 604 is configured as a volatile memory such as DRAM or SRAM. Storage 610 is configured as a non-volatile memory such as HDD or SSD, for example.

Storage 610 stores, in addition to OS 6102 for implementing basic functions, support program 6104 for providing functions specific to support device 600 and a network monitoring program 6106 providing functions specific to the setting device for the monitoring system. Specifically, network monitoring program 6106 is executed by processor 602 to allow support device 600 to implement the setting device for the monitoring system according to the present embodiment.

Input unit 606 is configured as a keyboard and/or a mouse to receive user's operation. Output unit 608 is configured as a display, various indicators, and/or a printer, for example, to output results of processing from processor 602.

USB controller 620 exchanges data with control device 1 for example through USB connection.

Support device 600 has optical drive 612, and a program stored in a recording medium 614 (optical recording medium such as DVD (Digital Versatile Disc) for example) that stores a computer-readable program in a non-transitory manner is read and installed in storage 610 for example.

While support program 6104 and network monitoring program 6106 for example executed by support device 600 may be installed through computer-readable recording medium 614, the programs may also be downloaded from a server on the network and then installed. The functions provided by support device 600 according to the present embodiment may also be implemented by means of a part of modules provided by the OS.

While Fig. 6 shows an example configuration where processor 602 executes programs to provide necessary functions specific to support device 600, a part or all of these provided functions may be implemented by means of a dedicated hardware circuit (such as ASIC or FPGA, for example).

### <G. Configuration of Monitoring System>

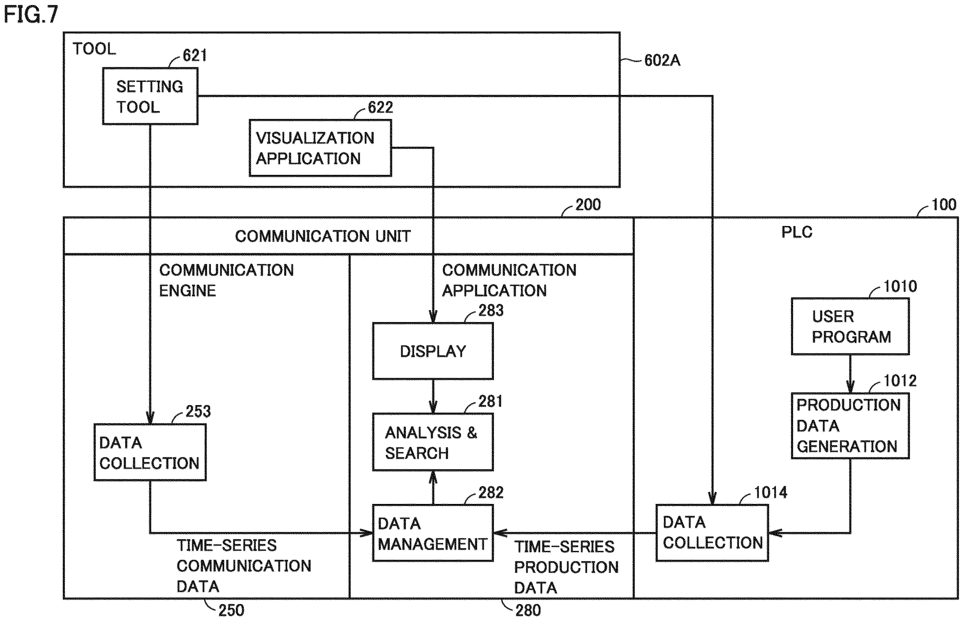

Fig. 7 shows a schematic configuration of a monitoring system according to the present embodiment. As shown in Fig. 7, the monitoring system includes a tool 602A (monitoring setting tool), communication unit 200, and control unit 100. Processor 602 executes network monitoring program 6106 to implement tool 602A in support device 600 (see Fig. 6).

Tool 602A includes a setting tool 621 and a visualization application 622. Setting tool 621 is a collected-data setting unit that makes settings for data collected by communication unit 200 and control unit 100 (PLC). Visualization application 622 is a display setting unit that makes settings for a display process in communication unit 200.

Communication unit 200 includes communication engine 250 and a communication application 280. Communication engine 250 includes a data collection module 253. Data collection module 253 collects time-series communication data of a target to be monitored.

Communication application 280 is implemented in communication unit 200. Communication application 280 includes an analysis and search module 281, a data management module 282, and a display module 283. Data management module 282 collects time-series communication data from communication engine 250, and also collects time-series production data from control unit 100. Analysis and search module 281 associates the time-series production data with the time-series communication data. Display module 283 shows the time-series production data and the time-series communication data in accordance with settings of visualization application 622. For example, the time-series production data and the time-series communication data are shown on a display (not shown) of support device 600.

Control unit 100 includes a user program 1010, a production data generation module 1012, and a data collection module 1014. User program 1010 is a control program produced by a user, and provided from support device 600 to control unit 100. Control unit 100 executes the control program so that operation of control unit 100 and control system 10 is controlled. Production data generation module 1012 generates production data representing an operating condition (production condition) of control system 10. In one embodiment, the production data may be at least one of AI score, raw data, and feature value. Data collection module 1014 collects production data from production data generation module 1012.

Monitoring setting tool 602A (support device 600), communication unit 200, and control unit 100 constitute a monitoring system configured to monitor communication regarding a network. Production data generation module 1012 constitutes a production data generation unit configured to generate production data representing a condition of production by a production device. Data collection module 253, data collection module 1014, and data management module 282 constitute a data collection unit configured to collect communication data representing a condition of communication on an FA network, and collect the production data. Analysis and search module 281 constitutes a data analysis unit configured to associate the communication data with the production data that are collected by the data collection unit, in such a manner that the communication data is synchronized with the production data. Display module 283 is configured to perform a process for displaying the communication data and the production data associated with each other.

### <H. Network Monitoring>

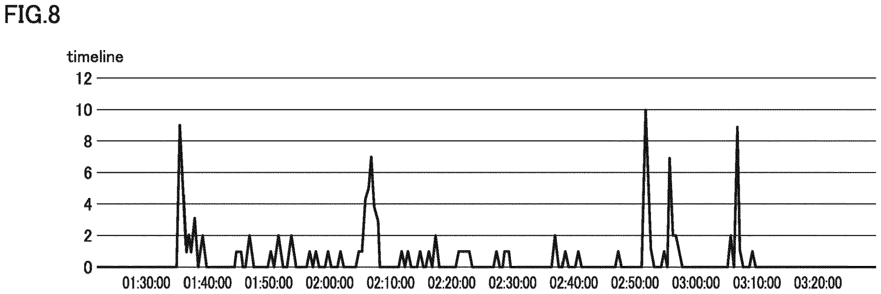

Fig. 8 is a schematic diagram showing an example time series of the volume of communication. As shown in Fig. 8, the volume of communication data (volume of communication) varies with time. It is seen from the graph shown in Fig. 8 that large data flows over the network at some instants of time. However, it is not easy to specify, from this graph, which data relates to production.

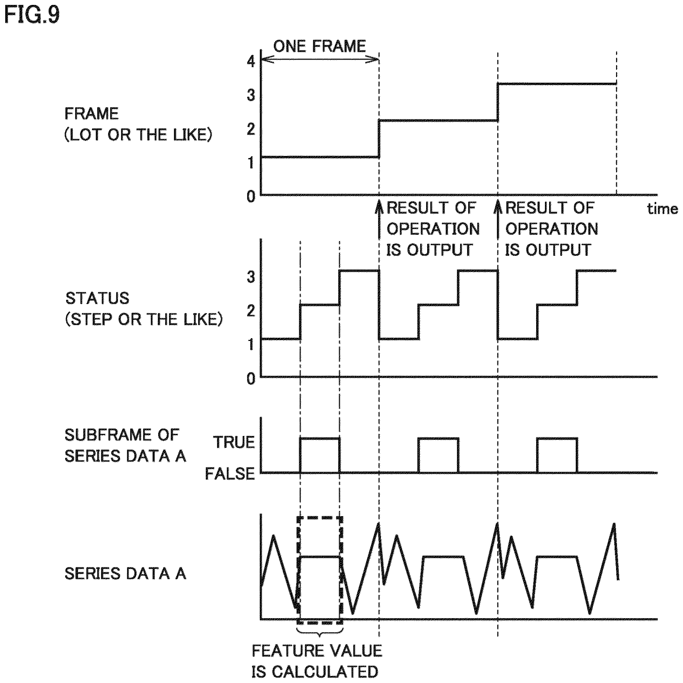

Fig. 9 is a schematic diagram showing an example of time-series production data. In Fig. 9, "FRAME" represents a unit of production (Takt for example). When one frame completes, a result of an operation is output from control unit 100. In Fig. 9, "SERIES DATA A" corresponds to the results of the operation by control unit 100.

In the example shown in Fig. 9, one frame is made up of three statuses. "STATUS" represents a state of control unit 100 corresponding to a production step. For example, production data generation module 1012 extracts, as a feature value, a portion (subframe) corresponding to the second status, from the series data. Based on the extracted feature value, production data generation module 1012 calculates the production score (AI score).

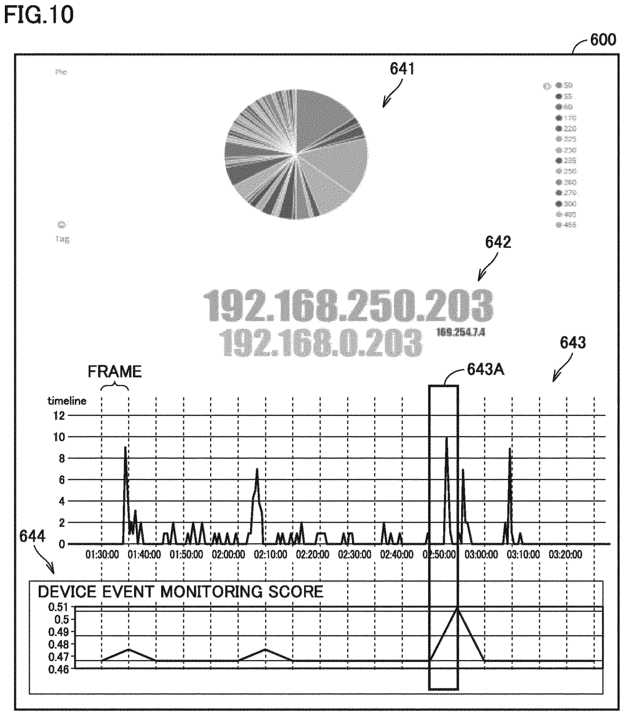

Fig. 10 schematically shows an example display of time-series communication data and time-series production data. For example, the display screen shown in Fig. 10 may be a screen of support device 600. In one example display, the display screen shows a communication data graph 643 and a production data graph 644. In addition, the display screen may show a communication data size graph 641 that is a circle graph showing the ratio of a data size to the total volume of communication data, as well as a communication node 642.

Communication data graph 643 indicates change of the communication data size with time. Production data graph 644 indicates change of production data frame by frame. Specifically, the production data is a production score (outlier). When the score has a large value, this value is treated as an abnormality score representing abnormality of production.

In this embodiment, analysis and search module 281 associates the production data with the communication data in such a manner that the production data is synchronized with the communication data. Display module 283 shows the production data and the communication data. As a result, communication data graph 643 and production data graph 644 are arranged in the top-to-bottom direction on the display screen. As shown in Fig. 10, the time on the horizontal axis of communication data graph 643 is synchronized with the time on the horizontal axis of production data graph 644.

Usually, statistics of communication data are prepared based on features of communication itself over the FA network. Such statistics are, for example, statistics of the cumulative volume of communication (data amount or the like) from the start of operation of the device, statistics for the band for a second, and statistics of the extent of display. Such statistics, however, are irrelevant to the production data, and therefore, a communication parameter that relates to the unit of production cannot be specified. It is therefore necessary for a user to hold and confirm all data (log data for example), for the sake of management of security.

In accordance with the present embodiment, it is possible to extract (characterize) features from the communication data, frame by frame. Accordingly, the relation between the production data and the communication data can further be clarified. Characterization of the communication data, for example, can be done based on at least one of the following communication parameters.
(1) Communication band
(2) Communication volume counter
(3) Communication size
(4) Protocol counter
(5) Size per protocol
(6) The number of communication nodes within a frame

Further, in the present embodiment, the production data is changed frame by frame. Therefore, change of the communication data is also visualized frame by frame. The communication data is characterized for each unit of production (frame by frame), to thereby facilitate detection of a condition different from the normal condition of the control system (detection of a condition where an incident occurs, for example).

In the present embodiment, change of the communication data associated with production steps can be visualized, and therefore, the relation between the condition of communication and the condition of production can be made more clear. Communication data (volume of communication) when the production score becomes an abnormality score can be specified, and therefore, it is possible, when abnormality relevant to an incident occurs to production, to specify communication data associated with the production data and analyze the data. Accordingly, monitoring of the condition of communication over the FA network can be facilitated.

In the example in Fig. 10, sharp increase of the production score and the communication data is identified in a frame 643A. A user can thus confirm that the production score and the communication data have changed simultaneously. In such a case, there is a possibility that a certain incident concerning security of the FA network has occurred. The user can detect the possibility of occurrence of the incident.

Further, in accordance with the present embodiment, increase of the volume of log data can be suppressed. When there is no relation between the communication data and the production data, whether or not an incident has occurred has to be detected from only the condition of communication. It is therefore necessary to leave log data regarding communication as much as possible.

If, however, all the log data is stored in a server or the like, the capacity of the server is reduced by the log data. Further, because a user verifies the data based on only the communication parameters, a large volume of log data has to be analyzed, which increases the burden on the user.

In contrast, in accordance with the present embodiment, production data (production score) is monitored together with the communication data. Therefore, even when only the communication log data of a frame in which the production score has an abnormal value, as well as the communication log data of a few frames preceding the frame in time and a few frames following the frame in time are held, information about the condition of communication when abnormality of production occurs can be collected. As a result, increase of the volume of logs can be restrained and the burden, on the user, of analysis of logs can also be reduced.

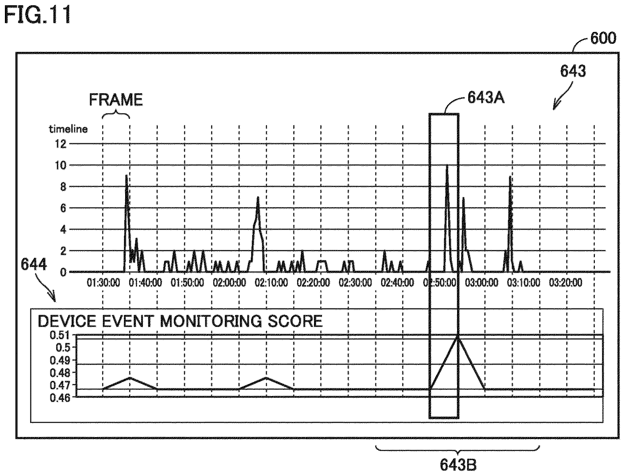

Fig. 11 shows communication data graph 643 and production data graph 644 extracted from the display screen shown in Fig. 10. As shown in Fig. 11, frame 643A is a frame in which the production score has an abnormal value. In the example shown in Fig. 11, communication log data of six frames is held. The six frames include frame 643A, two frames preceding frame 643A, and three frames following frame 643A.

The above number of frames is not limited to six. Further, the number of extracted frames may be fixed in advance or may be set by a user.

Further, in accordance with the present embodiment, a communication log associated with the production score having an abnormal value can be specified. Therefore, communication logs other than the above communication log may be discarded. For example, the other communication logs may be discarded after elapse of a certain time. Alternatively, the other communication logs may be discarded when the cumulative volume of communication logs reaches a set value.

Thus, in accordance with the present embodiment, production data can be associated with communication data to facilitate monitoring of communication over the FA network. Therefore, it is possible to cause a user to detect occurrence of an incident of communication accompanied by abnormality of production, without requiring the user to have sophisticated expert knowledge.

It should be construed that the embodiments disclosed herein are given by way of illustration in all respects, not by way of limitation. It is intended that the scope of the present invention is defined by claims, not by the description above,

### REFERENCE SIGNS LIST

1 control device; 2 first network; 4 second network; 10 control system; 100 control unit; 102, 202, 302, 602 processor; 104, 204, 304 chipset; 106, 206, 306 primary memory; 108, 208, 308 secondary memory; 110, 210 communication controller; 112, 212, 620 USB controller; 114, 214, 314 memory card interface; 115, 215, 315 memory card; 116, 118, 120, 216, 218 network controller; 122, 322 internal bus controller; 124, 224, 324 indicator; 142, 144, 242 communication port; 150 control engine; 160 information engine; 170 broker; 180, 260, 360 log database; 200 communication unit; 250 communication engine; 253, 1014 data collection module; 280 communication application; 281 analysis and search module; 282 data management module; 283 display module; 300 safety unit; 350 safety engine; 400 functional unit; 450 power supply unit; 500 field device; 600 support device; 602A monitoring setting tool; 604 main memory; 606 input unit; 608 output unit; 610 storage; 612 optical drive; 614 recording medium; 618 processor bus; 621 setting tool; 622 visualization application; 641 communication data size graph; 642 communication node; 643 communication data graph; 643A frame; 644 production data graph; 700 SCADA device; 900 database; 1010 user program; 1012 production data generation module; 6104 support program; 6106 network monitoring program; A, B line

## Claims

1. A communication monitoring system configured to monitor communication regarding a network to which a production device (500) is connected, the communication monitoring system comprising:
a production data generation unit (1012) configured to generate production data representing a condition of production by the production device (500);
a data collection unit (253, 1014, 282) configured to collect communication data representing a condition of communication on the network, and collect the production data;
a data analysis unit (281) configured to associate the communication data with the production data that are collected by the data collection unit (253, 1014, 282), in such a manner that the communication data is synchronized with the production data; and
a data display unit (283) configured to perform a process for displaying the communication data and the production data that are associated with each other, the data display unit (283) configured to display a communication data graph (643) and a production data graph (644) such that a time indicated on a horizontal axis of the communication data graph (643) is synchronized with a time indicated on a horizontal axis of the production data graph (644).

2. The communication monitoring system according to claim 1, wherein the production data is a production score representing abnormality occurring to a production line.

3. The communication monitoring system according to claim 2, wherein the production score is a score calculated for each of frames that represents a unit time of the production by the production device.

4. The communication monitoring system according to claim 3, wherein
the communication data includes a volume of communication over the network and a communication log, and
the data analysis unit (281) is configured to hold communication logs generated in a predetermined number of the respective frames including a frame in which the production score has an abnormal value, and discard communication logs generated in frames other than the predetermined number of the respective frames.

5. A communication monitoring method for monitoring communication regarding a network to which a production device (500) is connected, the communication monitoring method comprising:
generating, by a monitoring system (100, 200), production data representing a condition of production by the production device;
collecting, by the monitoring system (100, 200), communication data representing a condition of communication on the network, and the production data;
associating, by the monitoring system (100, 200), the communication data with the production data in such a manner that the communication data is synchronized with the production data; and
displaying, by the monitoring system (100, 200), the communication data and the production data that are associated with each other, including displaying a communication data graph (643) and a production data graph (644) such that a time indicated on a horizontal axis of the communication data graph (643) is synchronized with a time indicated on a horizontal axis of the production data graph (644).

## Patentansprüche

1. Kommunikationsüberwachungssystem, das dazu ausgelegt ist, Kommunikation betreffend ein Netzwerk zu überwachen, welches mit einer Produktionsvorrichtung (500) verbunden ist, wobei das Kommunikationsüberwachungssystem Folgendes umfasst:
eine Produktionsdatenerzeugungseinheit (1012), die dazu ausgelegt ist, Produktionsdaten zu erzeugen, welche einen Zustand der Produktion durch die Produktionsvorrichtung (500) darstellen;
eine Datensammeleinheit (253, 1014, 282), die dazu ausgelegt ist, Kommunikationsdaten zu sammeln, die einen Zustand der Kommunikation auf dem Netzwerk darstellen, und die Produktionsdaten zu sammeln;
eine Datenanalyseeinheit (281), die dazu ausgelegt ist, die Kommunikationsdaten den von der Datensammeleinheit (253, 1014, 282) gesammelten Produktionsdaten so zuzuordnen, dass die Kommunikationsdaten mit den Produktionsdaten synchronisiert sind; und
eine Datenanzeigeeinheit (283), die dazu ausgelegt ist, einen Prozess zum Anzeigen der einander zugeordneten Kommunikationsdaten und Produktionsdaten durchzuführen, wobei die Datenanzeigeeinheit (283) dazu ausgelegt ist, einen Kommunikationsdatengraphen (643) und einen Produktionsdatengraphen (644) anzuzeigen, sodass eine Zeit, die auf einer horizontalen Achse des Kommunikationsdatengraphs (643) angegeben ist, mit einer Zeit, die auf einer horizontalen Achse des Produktionsdatengraphs (644) angegeben ist, synchronisiert ist.

2. Kommunikationsüberwachungssystem nach Anspruch 1, wobei die Produktionsdaten ein Produktionszahlenwert sind, der für eine Anomalie steht, welche in einer Fertigungsstrecke vorliegt.

3. Kommunikationsüberwachungssystem nach Anspruch 2, wobei der Produktionszahlenwert ein Zahlenwert ist, der für jeden aus Rahmen berechnet wird, die für eine Einheitszeit der Produktion durch die Produktionsvorrichtung stehen.

4. Kommunikationsüberwachungssystem nach Anspruch 3, wobei
die Kommunikationsdaten ein Volumen von Kommunikation über das Netzwerk und ein Kommunikationsprotokoll umfassen und
die Datenanalyseeinheit (281) dazu ausgelegt ist, Kommunikationsprotokolle, die in einer vorbestimmten Anzahl von entsprechenden Rahmen, einschließlich eines Rahmens, in dem der Produktionszahlenwert einen abnormalen Wert aufweist, erzeugt wurden, zu speichern und Kommunikationsprotokolle, die in anderen Rahmen als der vorbestimmten Anzahl der entsprechenden Rahmen erzeugt wurden, zu verwerfen.

5. Kommunikationsüberwachungsverfahren zum Überwachen von Kommunikation betreffend ein Netzwerk, welches mit einer Produktionsvorrichtung (500) verbunden ist, wobei das Kommunikationsüberwachungsverfahren Folgendes umfasst:
Erzeugen von Produktionsdaten, die einen Zustand der Produktion durch die Produktionsvorrichtung darstellen, durch ein Überwachungssystem (100, 200);
Sammeln von Kommunikationsdaten, die einen Zustand der Kommunikation auf dem Netzwerk darstellen, und der Produktionsdaten durch das Überwachungssystem (100, 200);
Zuordnen der Kommunikationsdaten zu den Produktionsdaten durch das Überwachungssystem (100, 200) derart, dass die Kommunikationsdaten mit den Produktionsdaten synchronisiert werden; und
Anzeigen der einander zugeordneten Kommunikationsdaten und Produktionsdaten durch das Überwachungssystem (100, 200), einschließlich Anzeigen eines Kommunikationsdatengraphs (643) und eines Produktionsdatengraphen (644), sodass eine Zeit, die auf einer horizontalen Achse des Kommunikationsdatengraphen (643) angegeben ist, mit einer Zeit, die auf einer horizontalen Achse des Produktionsdatengraphs (644) angegeben ist, synchronisiert wird.

## Revendications

1. Système de surveillance de communication configuré pour surveiller une communication concernant un réseau auquel un dispositif de production (500) est connecté, le système de surveillance de communication comprenant :
une unité de génération de données de production (1012) configurée pour générer des données de production représentant une condition de production par le dispositif de production (500) ;
une unité de collecte de données (253, 1014, 282) configurée pour collecter des données de communication représentant une condition de communication sur le réseau, et collecter les données de production ;
une unité d'analyse de données (281) configurée pour associer les données de communication aux données de production qui sont collectées par l'unité de collecte de données (253, 1014, 282), de telle sorte que les données de communication soient synchronisées avec les données de production ; et
une unité d'affichage de données (283) configurée pour exécuter un processus d'affichage des données de communication et des données de production qui sont associées les unes aux autres, l'unité d'affichage de données (283) étant configurée pour afficher un graphique de données de communication (643) et un graphique de données de production (644) de telle sorte qu'un temps indiqué sur un axe horizontal du graphique de données de communication (643) soit synchronisé avec un temps indiqué sur un axe horizontal du graphique de données de production (644).

2. Système de surveillance de communication selon la revendication 1, dans lequel les données de production sont un score de production représentant une anomalie survenant sur une ligne de production.

3. Système de surveillance de communication selon la revendication 2, dans lequel le score de production est un score calculé pour chacune des trames qui représente un temps unitaire de la production par le dispositif de production.

4. Système de surveillance de communication selon la revendication 3, dans lequel
les données de communication comprennent un volume de communications sur le réseau et un journal de communications, et
l'unité d'analyse de données (281) est configurée pour contenir des journaux de communication générés dans un nombre prédéterminé des trames respectives comprenant une trame dans laquelle le score de production présente une valeur anormale, et éliminer des journaux de communications générés dans des trames autres que le nombre prédéterminé des trames respectives.

5. Procédé de surveillance de communication pour surveiller une communication concernant un réseau auquel un dispositif de production (500) est connecté, le procédé de surveillance de communication comprenant les étapes consistant à :
générer, par l'intermédiaire d'un système de surveillance (100, 200), des données de production représentant une condition de production par le dispositif de production ;
collecter, par l'intermédiaire du système de surveillance (100, 200), des données de communication représentant une condition de communication sur le réseau, et les données de production ;
associer, par l'intermédiaire du système de surveillance (100, 200), les données de communication aux données de production de telle sorte que les données de communication soient synchronisées avec les données de production ; et
afficher, par l'intermédiaire du système de surveillance (100, 200), les données de communication et les données de production qui sont associées les unes aux autres, y compris afficher un graphique de données de communication (643) et un graphique de données de production (644) de telle sorte qu'un temps indiqué sur un axe horizontal du graphique de données de communication (643) soit synchronisé avec un temps indiqué sur un axe horizontal du graphique de données de production (644).
